# EUROPEAN PATENT APPLICATION

(11) **EP 4 826 849 A1**
(43) Date of publication of application: **21.10.2026**
(21) Application number: 26179260.0
(22) Date of filing: 25.03.2024
(51) Int. Cl.: H01M 10/613, H01M 10/617, H01M 10/6556, H01M 10/6567

(54) **BATTERY PACK COMPRISING A LIQUID COOLING PLATE**

(30) Priority: 25.10.2023 CN 202311393256; 25.10.2023 CN 202311397072
(62) Document number(s) of the earlier application(s) in accordance with Art. 76 EPC: 24165751.9 / 4 546 506
(71) Applicant: Jinko Energy Storage Technology Co., Ltd., Haining, Zhejiang 314415 (CN)
(72) Inventor: LIANG, Yadong, Haining, 314415 (CN); CHEN, Guochao, Haining, 314415 (CN); GE, Shaorong, Haining, 314415 (CN)
(74) Representative: DREISS Patentanwälte PartG mbB

(57) **Abstract**

A liquid cooling plate and a battery pack are provided. The liquid cooling plate includes a plate body and a separator. The plate body defines a cooling chamber, and the plate body is provided with a liquid inlet and a liquid outlet. The cooling chamber communicates with outside through the liquid inlet and the liquid outlet. The separator is installed to the plate body and separates the cooling chamber into cooling flow-channels, and adjacent cooling flow-channels communicate with each other. The separator is non-uniformly distributed at the plate body. Where the cooling flow-channel has a smaller flowing area, the cooling liquid flows faster, thereby increasing the flowing speed of the cooling liquid. Where the cooling flow-channel has a larger flowing area, the cooling liquid flows slower, thereby prolonging the heat exchange time of the cooling liquid and improving the uniformity of heat dissipation of the liquid cooling plate.

## Description

### TECHNICAL FIELD

The present disclosure relates to the technical field of energy storage batteries, and in particular to a battery pack including a liquid cooling plate.

### BACKGROUND

A battery pack is an important component of an energy storage system, and is used to store or output electrical energy. A battery pack includes a case and cells installed in the case. Several cells are connected in series or parallel to increase the energy storage and output power of the battery pack. During the operation of the battery pack, the cells will generate a large amount of heat, which may cause risks such as expansion and damage of the cells, activation of the fire protection system, etc., thus affecting the normal operation of the battery pack.

In the related art, a liquid cooling plate is usually installed in the case. The liquid cooling plate includes a uniformly distributed cooling flow-channel. The heat dissipation of the cells can be achieved through the flow of cooling liquid in the cooling flow-channel. The temperature of the cooling liquid at the liquid inlet is relatively low and the temperature of the cooling liquid at the liquid outlet is relatively high, while the uniformly distributed cooling flow-channel keeps a flow rate of the cooling liquid consistent, making it impossible for the high-temperature cooling liquid at the liquid outlet to be discharged quickly. As a result, the heat dissipation efficiency of the cells at the liquid outlet is poor, and the heat dissipation of the entire energy storage pack is not uniform. Prior art documents include US 2022344744A1, EP 3723188A1, and CN 109390642A.

### SUMMARY

The present disclosure provides a liquid cooling plate and a battery pack, which can improve the heat dissipation efficiency of cells at the liquid outlet and improve the uniformity of heat dissipation. The invention is set out in the appended set of claims.

In an aspect, the present disclosure provides a battery pack including a liquid cooling plate, including: a plate body defining a cooling chamber and provided with a liquid inlet and a liquid outlet, the cooling chamber communicating with outside through the liquid inlet and the liquid outlet; and a separator installed to the plate body, along a direction in which the liquid inlet and the liquid outlet are distributed, the cooling chamber being divided into cooling flow-channels by the separator, and adjacent ones of the cooling flow-channels communicating with each other. The separator is non-uniformly distributed at the plate body.

In the present disclosure, the separator is non-uniformly distributed at the plate body. Where the cooling flow-channel has a smaller flowing area, the cooling liquid flows faster, thereby increasing the slowing speed of the cooling liquid; and where the cooling flow-channel has a larger flowing area, the cooling liquid flows slower, thereby extending the heat exchange time of the cooling liquid. In this way, the uniformity of heat dissipation of the liquid cooling plate can be improved.

The cooling flow-channels at least include a first flow-channel and a second flow-channel, and a flowing cross-sectional area of the first flow-channel is different from a flowing cross-sectional area of the second flow-channel; and along the direction in which the liquid inlet and the liquid outlet are distributed, at least one of the first flow-channel or the second flow-channel is symmetrically distributed with respect to the central axis, and a preset angle is formed between the central axis and a first direction.

In the present disclosure, the cooling flow-channel includes a first flow-channel and a second flow-channel with different flowing cross-sectional areas, thereby increasing the flowing speed of the cooling liquid in the liquid cooling plate, thus improving the cooling effect of the liquid cooling plate on the battery pack. The cooling flow-channel is symmetrically distributed with respect to the central axis, thereby simplifying the processing difficulty of the liquid cooling plate and being beneficial to shortening the processing cycle of the liquid cooling plate. In addition, the size and quantity of equipment for processing the liquid cooling plate can be reduced, thereby reducing the processing cost of the liquid cooling plate. Further, the design difficulty and processing difficulty of the equipment for processing the liquid cooling plate can be reduced, thereby being beneficial to reducing the processing cost of the liquid cooling plate.

In some embodiments, the flowing cross-sectional area of the first flow-channel is greater than the flowing cross-sectional area of the second flow-channel; and along the direction in which the liquid inlet and the liquid outlet are distributed, the liquid inlet and the liquid outlet communicate with the first flow-channel located at each of two sides of the central axis, respectively, and the second flow-channel is located between the first flow-channel and the central axis.

The flowing cross-sectional areas of the cooling flow-channels decreases along the direction in which the liquid inlet and the liquid outlet are distributed, the flowing cross-sectional area of the cooling flow-channel at the liquid outlet is smaller than the flowing cross-sectional area of the cooling flow-channel at the liquid inlet.

The plate body includes a first side wall and a second side wall oppositely arranged along the first direction; the separator includes a first separating member and a second separating member, and along an extending direction of the separator, an end of the first separating member is connected to the first side wall and another end of the first separating member is spaced from the second side wall by a first gap, and an end of the second separating member is connected to the second side wall and another end of the second separating member is spaced from the first side wall by a second gap; and along the direction in which the liquid inlet and the liquid outlet are distributed, the first separating member and the second separating member are alternately arranged and spaced from one another.

In some embodiments, along the extending direction of the separator, a length L1 of the first gap satisfies 0<L1≤44mm, and a length L2 of the second gap satisfies 0<L2≤44mm.

In some embodiments, in a direction perpendicular to the extending direction of the separator and a thickness direction of the plate body, a thickness H1 of the first separating member satisfies 3mm≤H1≤5mm, and a thickness H2 of the second separating member satisfies 3mm≤H2≤5mm.

The separator further includes at least one third separating member, and along the extending direction of the separator, an end of each of the at least one third separating member is spaced from first side wall by a third gap, and another end of each of the at least one third separating member is spaced from first side wall by a fourth gap; and along the direction in which the liquid inlet and the liquid outlet are distributed, one of the at least one third separating member is located between the first separating member and the second separating member.

In some embodiments, along the extending direction of the separator, a length L3 of the third gap satisfies 0<L3≤45mm, and a length L4 of the fourth gap satisfies 0<L4≤16mm.

In some embodiments, in a direction perpendicular to the extending direction of the separator and a thickness direction of the plate body, a thickness H3 of each of the at least one third separating member satisfies 3mm≤H3≤5mm.

The separator includes a fourth separating member arranged at the central axis; the plate body includes a first side wall and a second side wall arranged oppositely along a first direction; along an extending direction of the separator, an end of the fourth separating member is spaced from the first side wall by a fifth gap and another end of the fourth separating member is connected to the second side wall, or an end of the fourth separating member is spaced from the second side wall by a sixth gap and another end of the fourth separating member is connected to the first side wall, or an end of the fourth separating member is spaced from the first side wall by a fifth gap and another end of the fourth separating member is spaced from the second side wall by a sixth gap; and in a direction perpendicular to an extending direction of the separator and a thickness direction of the plate body, a thickness H4 of the fourth separating member satisfies 7mm≤H4≤8mm.

In some embodiments, the plate body includes a top wall and a bottom wall arranged oppositely along a thickness direction of the liquid cooling plate; the separator includes a dividing body, and along the thickness direction of the liquid cooling plate, two ends of the dividing body are provided with a first transition portion and a second transition portion, respectively, the first transition portion is connected to the top wall, and the second transition portion is connected to the bottom wall; and in a direction perpendicular to an extending direction of the separator and a thickness direction of the plate body, a thickness of the first transition portion is greater than a thickness of the dividing body, and a thickness of the second transition portion is greater than the thickness of the dividing body.

In some embodiments, in the direction perpendicular to the extending direction of the separator and the thickness direction of the plate body, a side wall of the first transition portion is a straight surface or an arc surface, and a side wall of the second transition portion is a straight surface or an arc surface.

The battery pack further includes a case including a cover and a bottom plate, the cover and the bottom plate defining a receiving cavity; and cells installed in the receiving cavity. The bottom plate is the liquid cooling plate described above, or the liquid cooling plate described above is installed between the bottom plate and the cells.

In the present disclosure, in some cases, the bottom plate is used as the liquid cooling plate, so that an overall size of the battery pack can be reduced, thereby increasing the energy density of the battery pack per unit volume. Further, it is helpful to increase the energy storage and discharge capacity of the battery pack, and improve the performance of the battery pack. In some other cases, the liquid cooling plate is separated from the bottom plate, when the liquid cooling plate or the bottom plate is damaged, it can be replaced separately, thereby facilitating the installation and replacement of the liquid cooling plate and/or the bottom plate, and thus reducing the maintenance cost of the battery pack. The cooling flow-channel includes a first flow-channel and a second flow-channel with different flowing cross-sectional areas, thereby increasing the flowing speed of the cooling liquid in the liquid cooling plate, thus improving the cooling effect of the liquid cooling plate on the battery pack. The cooling flow-channel is symmetrically distributed with respect to the central axis, thereby simplifying the processing difficulty of the liquid cooling plate and being beneficial to shortening the processing cycle of the liquid cooling plate. In addition, the size and quantity of equipment for processing the liquid cooling plate can be reduced, thereby reducing the processing cost of the liquid cooling plate. Further, the design difficulty and processing difficulty of the equipment for processing the liquid cooling plate can be reduced, thereby being beneficial to reducing the processing cost of the liquid cooling plate.

It should be understood that the above general description and the following detailed description are only exemplary and do not limit the present disclosure.

### BRIEF DESCRIPTION OF DRAWINGS

FIG. 1 is an exploded view of a partial structure of a battery pack according to an embodiment of the present disclosure;
FIG. 2 is a schematic structural diagram of a bottom plate in FIG. 1, where the bottom plate is a liquid cooling plate;
FIG. 3 is a perspective view of the liquid cooling plate in FIG. 2 according to an embodiment of the present disclosure;
FIG. 4 is a perspective view of the liquid cooling plate in FIG. 2 according to another embodiment of the present disclosure;
FIG. 5 is a perspective view of the liquid cooling plate in FIG. 2 according to yet another embodiment of the present disclosure;
FIG. 6 is a top view of FIG. 5;
FIG. 7 is a perspective view of the liquid cooling plate in FIG. 2 according to yet another embodiment of the present disclosure;
FIG. 8 is a perspective view of the liquid cooling plate in FIG. 2 according to yet another embodiment of the present disclosure;
FIG. 9 is a perspective view of the liquid cooling plate in FIG. 2 according to yet another embodiment of the present disclosure;
FIG. 10 is a perspective view of the liquid cooling plate in FIG. 2 according to yet another embodiment of the present disclosure;
FIG. 11 is a left view of the liquid cooling plate in FIG. 2 according to an embodiment of the present disclosure;
FIG. 12 is an enlarged view of part A in FIG. 11; and
FIG. 13 is a schematic diagram of a connection structure of a separator and a plate body in FIG. 12 according to an embodiment of the present disclosure.

### Reference signs

01-case;
   011-cover;
   012-bottom plate;
02-cell;
   1-plate body;
      11-cooling chamber;
      12-liquid inlet;
   13-liquid outlet;
   14-cooling flow-channel;
      141-first flow-channel;
      142-second flow-channel;
   15-central axis;
   16-first side wall;
   17-second side wall;
   18-third side wall;
   19-fourth side wall;
   1a-top wall;
   1b-bottom wall;
   1c-first plate body;
   1d-second plate body;
2-separator;
   21-first separating member;
   22-second separating member;
   23-third separating member;
   24-fourth separating member;
   25-dividing body;
   26-first transition portion;
   27-second transition portion.

The accompanying drawings, which are incorporated in and constitute a part of the specification, illustrate embodiments consistent with the present disclosure and together with the description serve to explain the principles of the present disclosure.

### DESCRIPTION OF EMBODIMENTS

In order to better illustrate the technical solution of the present disclosure, the embodiments of the present disclosure will be described in detail below with reference to the accompanying drawings.

It should be noted that the described embodiments are only some of, rather than all of the embodiments of the present disclosure. Based on the embodiments in the present disclosure, all other embodiments obtained by those skilled in the art without making creative efforts shall fall within a scope of the present disclosure.

The terminology used in the embodiments of the present disclosure is for the purpose of describing embodiments only and is not intended to limit the present disclosure. As used in the present disclosure and the appended claims, the singular forms "a," "an" and "the" are intended to include the plural forms as well, unless the context clearly dictates otherwise.

It should be understood that the term "and/or" used herein is merely an association relationship describing associated objects, indicating that there may be three relationships, for example, A and/or B may indicate that three cases, i.e., A existing individually, A and B existing simultaneously, B existing individually. In addition, the character "/" herein generally indicates that the related objects before and after the character form an "or" relationship.

It should be noted that, the expressions such as "upper", "lower", "left", "right" and the like mentioned in embodiments of the present disclosure are described with reference to the placement status in the accompanying drawings, and should not be construed as limiting embodiments of the present disclosure. In addition, it should also be understood that, in the context, while referring to an element being formed "above" or "below" another element, it is possible that the element is directly formed "above" or "below" the other element, it is also possible that the element is formed "above" or "below" the other element via an intermediate element.

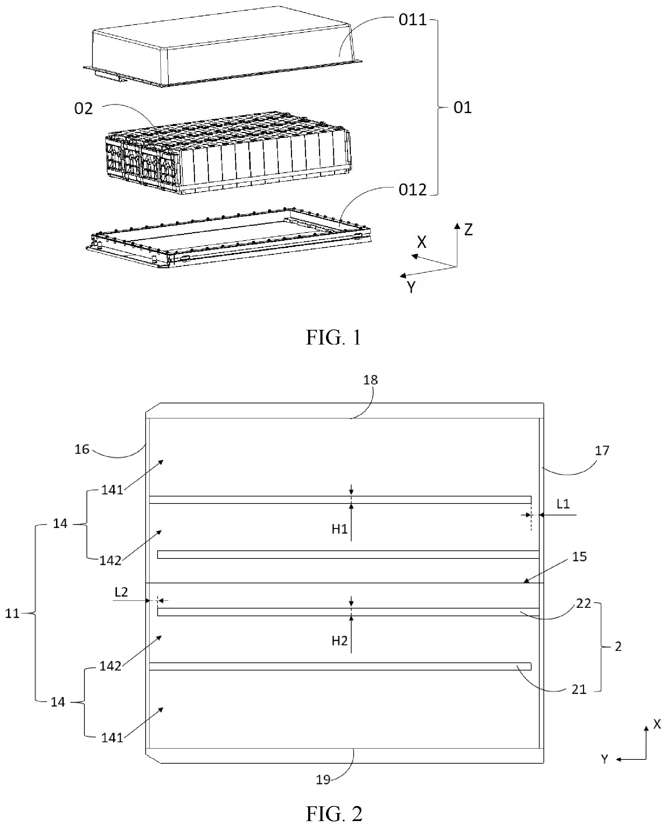

An embodiment of the present disclosure provides a battery pack. As shown in FIG. 1, the battery pack includes a case 01 and cells 02. The case 01 includes a cover 011 and a bottom plate 012. The cover 011 and the bottom plate 012 enclose a receiving cavity. The cells 02 are installed in the receiving cavity. A plurality of cells 02 is arranged along the first direction Y and are bundled and fixed to form a battery module. A plurality of battery modules is arranged along the second direction X and received in the receiving cavity. The first direction Y is perpendicular to the second direction X. The first direction Y and the second direction X are both perpendicular to a height direction of the battery pack.

In some embodiments, the bottom plate 012 is hollow inside and filled with cooling liquid. The heat dissipation of the cells 02 can be achieved through flowing of cooling liquid inside the bottom plate 012. That is, the bottom plate 012 is a liquid cooling plate, which is beneficial to reducing an overall size of the battery pack, thereby increasing the energy density of the battery pack per unit volume. Further, it is helpful to increase the energy storage and discharge capacity of the battery pack, and improve the performance of the battery pack. In another embodiment, the battery pack includes a liquid cooling plate. The liquid cooling plate is hollow inside and filled with cooling liquid. The liquid cooling plate is separated from the bottom plate 012, and is installed to the bottom plate 012. The liquid cooling plate is located between bottom plate 012 and cells 02. The heat dissipation of the cells 02 can be achieved through flowing of cooling liquid inside the bottom plate 012. In this case, when the liquid cooling plate or the bottom plate 012 is damaged, it can be replaced separately, thereby facilitating the installation and replacement of the liquid cooling plate and/or the bottom plate 012, and thus reducing the maintenance cost of the battery pack.

An embodiment of the present disclosure provides a liquid cooling plate, as described above, the liquid cooling plate can be installed to the bottom plate 012 or used as the bottom plate 012. In the following description, a case where the bottom plate 012 is used as the liquid cooling plate will be described as an example for detailed illustration.

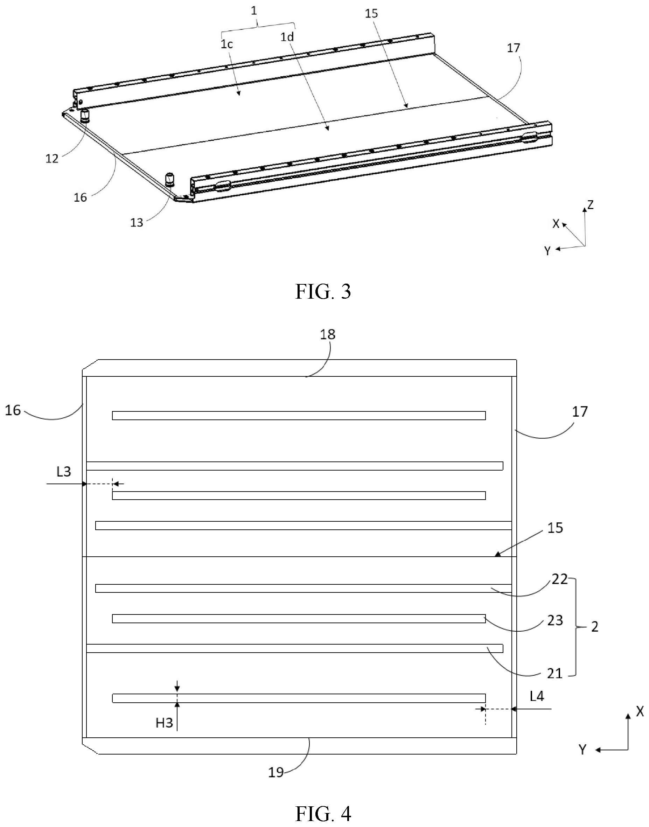

As shown in FIG. 2 and FIG. 3, the liquid cooling plate includes a plate body 1 and a separator 2. A cooling chamber 11 is formed in the plate body 1, and a liquid inlet 12 and a liquid outlet 13 are provided at the plate body 1. The cooling chamber 11 communicates with the outside through the liquid inlet 12 and the liquid outlet 13. The low-temperature cooling liquid from the outside enters the cooling chamber 11 through the liquid inlet 12, and then flows out through the liquid outlet 13. Then, the high-temperature cooling liquid that flows out through the liquid outlet 13 will enter a temporary storage tank, or be air-cooled and cooled by the condenser and then enter the cooling chamber 11 again through the liquid inlet 12. The present disclosure does not make restrictions on the flow and recycling manners of the cooling liquid. The separator 2 is installed to the plate body 1. Along the distribution direction of the liquid inlet 12 and the liquid outlet 13, the separator 2 divides the cooling chamber 11 into cooling flow-channels 14, and adjacent cooling flow-channels 14 communicates with each other. The separator 2 is non-uniformly distributed on the plate body 1, so that the cooling flow-channels 14 have at least two flowing areas. Where the cooling flow-channel 14 has a smaller flowing area, the cooling liquid flows faster, thereby increasing the slowing speed of the cooling liquid; and where the cooling flow-channel 14 has a larger flowing area, the cooling liquid flows slower, thereby extending the heat exchange time of the cooling liquid. In this way, the uniformity of heat dissipation of the liquid cooling plate can be improved.

The liquid cooling plate has a first direction Y, a second direction X and a third direction Z. The third direction Z may be parallel to the thickness direction of the liquid cooling plate. One of the first direction Y and the second direction X may be parallel to a length direction of the liquid cooling plate, while the other one of the first direction Y and the second direction X may be parallel to a width direction of the liquid cooling plate. As shown in FIG. 2, in an example, the first direction Y is parallel to the length direction of the liquid cooling plate, and the second direction X is parallel to the width direction of the liquid cooling plate.

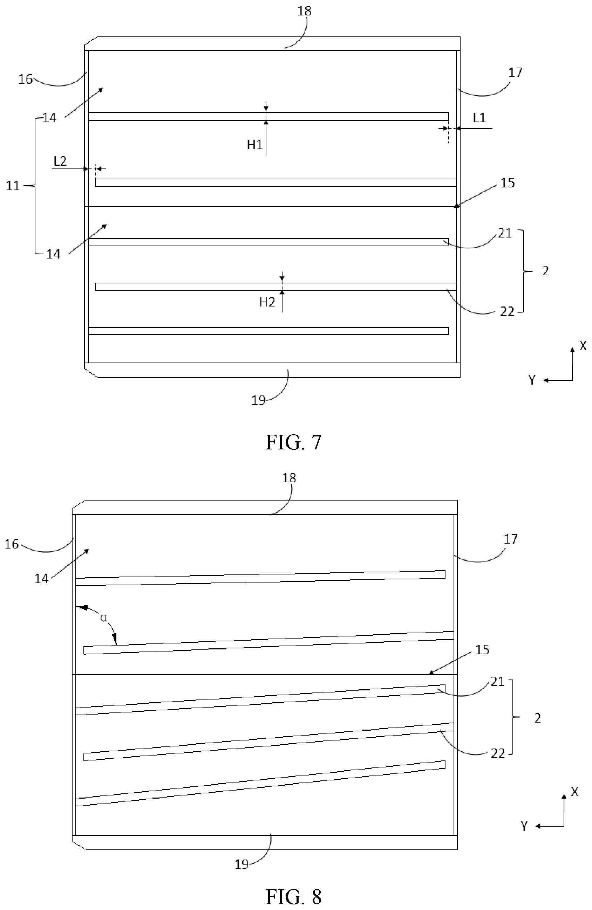

In some embodiments, the liquid inlet 12 and the liquid outlet 13 are distributed along the first direction Y, or the liquid inlet 12 and the liquid outlet 13 are distributed along the second direction X, or the liquid inlet 12 and the liquid outlet 13 are distributed along a direction which forms an angle with respect to the first direction Y or the second direction X, the angle being greater than 0° and less than 90°. As shown in FIG. 8, a preset angle α is formed between the direction along which the liquid inlet 12 and the liquid outlet 13 are distributed and an extending direction of the separator 2, where 0° ≤ α ≤90°. When α =0°, the extending direction of the separator 2 is parallel to the second direction X; when α=90°, the extending direction of the separator 2 is parallel to the first direction Y; and when 0°<α<90°, an angle is formed between the extending direction of the separator 2 and the first direction Y and the second direction X.

In some embodiments, as shown in FIG. 3, the cooling flow-channels 14 include at least a first flow-channel 141 and a second flow-channel 142. A flow cross-sectional area of the first flow-channel 141 is different from a flowing cross-sectional area of the second flow-channel 142. Along the direction in which the liquid inlet 12 and the liquid outlet 13 are distributed, first flow-channel 141 is symmetrically distributed with respect to a central axis 15, and/or, the second flow-channel 142 is symmetrically distributed with respect to a central axis 15. A preset angle is formed between the central axis 15 and the first direction Y.

The separator 2 divides the cooling chamber 11 into cooling flow-channels 14, and the cooling flow-channels 14 are symmetrically distributed with respect to the central axis 15. During the processing of the liquid cooling plate, the liquid cooling plate at one side of the central axis 15 can be processed first, and then the liquid cooling plate at the other side of the central axis 15 can be processed. In this way, the liquid cooling plate has a separate structure distributed symmetrically with respect to the central axis 15, thereby simplifying the processing of the liquid cooling plate and being beneficial to shortening the processing cycle of the liquid cooling plate. In addition, the size and quantity of equipment for processing the liquid cooling plate can be reduced, thereby reducing the processing cost of the liquid cooling plate. Further, the equipment for processing the liquid cooling plate can also be designed to have a symmetrical structure with respect to the central axis 15, so that the parts of the liquid cooling plate located at both sides of the central axis 15 can be processed simultaneously. In this way, the liquid cooling plate has an integrated structure, thereby reducing the design difficulty and processing difficulty of the equipment for processing the liquid cooling plate, which is beneficial to reducing the processing cost of the liquid cooling plate.

In some embodiments, the extending direction of the central axis 15 is parallel to the first direction Y, or the extending direction of the central axis 15 is parallel to the second direction X, or the extending direction of the central axis 15 forms an angle with respect to the first direction Y and the second direction X, the angle being greater than 0° and less than 90°. As shown in FIG. 2, in an example, the extending direction of the central axis 15 is parallel to the first direction Y.

In some embodiments, the extending directions of adjacent separators 2 are parallel to each other, and/or, the extending directions of adjacent separators 2 form an included angle less than 90°. For the convenience of description, in the following description, the extending directions of adjacent separators 2 being both parallel to the first direction Y is taken as an example for illustration.

When the flowing cross-sectional area of the first flow-channel 141 is different from the flowing cross-sectional area of the second flow-channel 142, there are the following situations. In the second direction X, a width of the first flow-channel 141 is different from a width of the second flow-channel 142; and/or, in the third direction Z, a height of the first flow-channel 141 is different from a height of the second flow-channel 142. In the following descriptions, the width of the first flow-channel 141 in the second direction X being different from the width of the second flow-channel 142 in the second direction X is taken as an example for illustration.

In some embodiments, as shown in FIG. 3, the flowing cross-sectional area of the first flow-channel 141 is greater than the flowing cross-sectional area of the second flow-channel 142. With reference to FIG. 2 and FIG. 3, along the direction in which the liquid inlet 12 and the liquid outlet 13 are distributed, that is, along the second direction X, the liquid inlet 12 and the liquid outlet 13 communicate with the first flow-channels 141 located at both sides of the central axis 15, and the second flow-channel 142 is located between the first flow-channel 141 and the central axis 15.

In some embodiments, the first flow-channel 141 is symmetrically distributed with respect to the central axis 15, and/or, the second flow-channel 142 is symmetrically distributed with respect to the central axis 15, and the flowing cross-sectional area of the first flow-channel 141 is greater than the flowing cross-sectional area of the second flow-channel 142, so that the flowing cross-sectional area of the cooling flow-channel 14 at the liquid inlet 12 and the liquid outlet 13 is greater than the flowing cross-sectional area of the cooling flow-channel 14 at the central axis 15. As a result, the cooling liquid at the liquid inlet 12 and the liquid outlet 13 has a larger quantity of flow and a lower flowing speed, thereby prolonging time for heat exchange between the cooling liquid at the liquid inlet 12 and the liquid outlet 13 and the cells 02 disposed above. In this way, the heat dissipation efficiency of the liquid cooling plate on the cells 02 at this position can be improved. The flowing cross-sectional area of the cooling flow-channel 14 at the central axis 15 is smaller, which reduces the quantity of flow of the cooling liquid at the central axis 15, and increases the flowing speed of the cooling liquid at the central axis 15, thereby further improving the heat dissipation efficiency of the liquid cooling plate on the cells 02. Meanwhile, the cooling liquid at the liquid inlet 12 can quickly flow to the liquid outlet 13, thereby reducing a risk that the cooling liquid flows unsmoothly due to insufficient kinetic energy of the cooling liquid at the central axis 15, and also reducing a risk that impurities in the cooling liquid or substances precipitated by the cooling liquid are deposited in the cooling flow-channel 14. Thus, it reduces a risk that the cooling-area flow-channel is blocked, thereby improving the operation stability of the liquid cooling plate and prolonging the service life of the liquid cooling plate.

In some embodiments, as shown in FIG. 7 to FIG. 10, along the direction in which the liquid inlet 12 and the liquid outlet 13 are distributed, for example, along the second direction X, the flowing cross-sectional area of the cooling flow-channel 14 gradually decreases. The flowing cross-sectional area of the cooling flow-channel 14 can vary uniformly or non-uniformly.

The flowing cross-sectional area of the cooling flow-channel 14 gradually decreases in the following manners. In the second direction X, a width of the cooling flow-channel 14 gradually decreases; and/or, in the third direction Z, a height of the cooling flow-channel 14 gradually decreases. In the following description, the width of the first flow-channel 121 in the second direction X being different from the width of the second flow-channel 122 in the second direction X is taken as an example for illustration.

In some embodiments, the flowing cross-sectional area of the cooling flow-channel 14 at the liquid inlet 12 is larger, and the flowing cross-sectional area of the cooling flow-channel 14 at the liquid outlet 13 is smaller, so that the cooling liquid at the liquid inlet 12 has a larger quantity of flow and a slower flowing speed, and the cooling liquid at the liquid outlet 13 has a smaller quantity of flow and a faster flowing speed. That is, as the cooling liquid flows from the liquid inlet 12 to the liquid outlet 13, the flowing speed of the cooling liquid gradually increases, so that the high-temperature cooling liquid at the liquid outlet 13 can be quickly discharged, and the low-temperature cooling liquid at the liquid inlet 12 can quickly flow to liquid outlet 13, thereby improving the heat dissipation efficiency of the cells 02 at the liquid outlet 13, thus improving the uniformity of heat dissipation of the entire liquid cooling plate.

As shown in FIG. 2, FIG. 3, FIG. 6 and FIG. 11, the plate body 1 includes a first side wall 16 and a second side wall 17 which are oppositely arranged along the first direction Y, a third side wall 18 and a fourth side wall 19 which are oppositely arranged along the second direction X, and a top wall 1a and a bottom wall 1b which are oppositely arranged along the third direction Z. The first side wall 16, the second side wall 17, the third side wall 18, the fourth side wall 19, the top wall 1a and the bottom wall 1b enclose a cooling chamber 11. In the third direction Z, two ends of the separator 2 are connected to the top wall 1a and the bottom wall 1b. The liquid inlet 12 and the liquid outlet 13 are both arranged at the top wall 1a, to increase the installation space of the liquid inlet 12 and the liquid outlet 13, thereby facilitating the installation of the liquid inlet 12 and the liquid outlet 13 and pipelines. Meanwhile, it reduces a risk of an increase in the overall thickness of the bottom wall 1b caused by that the liquid inlet 12 and the liquid outlet 13 are arranged at the first side wall 16, the second side wall 17, the third side wall 18 or the fourth side wall 19.

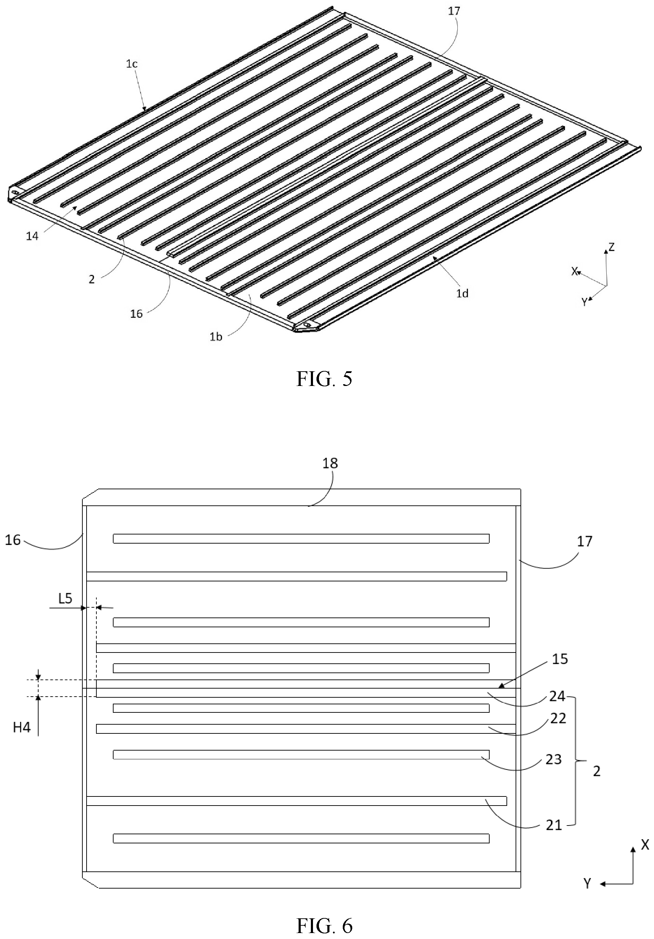

As shown in FIG. 3 and FIG. 6, the separator 2 includes a first separating member 21 and a second separating member 22. Along the extending direction of the separator 2, an end of the first separating member 21 is connected to the first side wall 16, and another end of the first separating member 21 is spaced from the second side wall 17 by a first gap; and an end of the second separating member 22 is connected to the second side wall 17, and another end of the second separating member 22 is spaced from the first side wall 16 by a second gap. Adjacent cooling flow-channels 14 communicate with each other through the first gap or the second gap. Along the direction in which the liquid inlet 12 and the liquid outlet 13 are distributed, for example, along the second direction X, the first separating member 21 and the second separating member 22 are alternately arranged and spaced from one another.

In some embodiments, the first separating member 21 and the second separating member 22 are alternately arranged along the second direction X, so that the first gap and the second gap are alternately arranged along the second direction X. In this way, a flowing path of the cooling liquid in the cooling flow-channel 14 is S-shaped, thereby extending the flowing path of the cooling liquid in the cooling flow-channel 14, thus extending the time for heat exchange of the cooling liquid to improve the heat dissipation efficiency of the liquid cooling plate on the cells 02.

The extending direction of the separator 2 is parallel to the first direction Y, or an angle greater than 0° and less than 90° is formed between the extending direction of the separator 2 and the first direction Y, to increase the flexibility of arrangement of the separator 2. In the example, as shown in FIG. 3, the extending direction of the separator 2 is parallel to the first direction Y.

As shown in FIG. 3 and FIG. 6, along the extending direction of the separator 2, for example, along the first direction Y, a length L1 of the first gap satisfies: 0<L1≤44mm. In an example, the length of the first gap may be 5mm, 10mm, 15mm, 20mm, 25mm, 30mm, 35mm, 40mm or 44mm, etc.

If the length of the first gap is too large (i.e., L1>44mm), the flowing speed of the cooling liquid at the first gap is too small, and there is a risk that impurities in the cooling liquid and substances precipitated by the cooling liquid will be deposited at the first gap, resulting in blockage at the first gap. Therefore, by making 0<L1≤44mm, the flowing speed of the cooling liquid at the first gap can be increased, thereby improving the smoothness of the cooling liquid flowing in the cooling flow-channel 14, thus improving the operation stability of the liquid cooling plate and prolonging the service life of the liquid cooling plate.

Along the extending direction of the separator 2, for example, along the first direction Y, a length L2 of the second gap satisfies: 0<L2≤44mm. In the example, the length of the second gap may be 5mm, 10mm, 15mm, 20mm, 25mm, 30mm, 35mm, 40mm or 44mm, etc.

If the length of the second gap is too large (i.e., L2>44mm), the flowing speed of the cooling liquid at the second gap is too small, and there is a risk that impurities in the cooling liquid and substances precipitated by the cooling liquid will be deposited at the second gap, resulting in blockage at the second gap. Therefore, by making 0<L2≤44mm, the flowing speed of the cooling liquid at the second gap can be increased, thereby improving the smoothness of the cooling liquid flowing in the cooling flow-channel 14, thus improving the operation stability of the liquid cooling plate and prolonging the service life of the liquid cooling plate.

As shown in FIG. 3 and FIG. 6, in a direction perpendicular to the extending direction of the separator 2, for example, in the second direction X, a thickness H1 of the first separating member 21 satisfies: 3mm≤H1≤5mm. For example, the thickness of the first separating member 21 may be 3mm, 3.1mm, 3.2mm, 3.3mm, 3.4mm, 3.5mm, 3.6mm, 3.7mm, 3.8mm, 3.9mm, 4.0mm, 4.1mm, 4.2mm, 4.3mm, 4.4mm, 4.5 mm, 4.6mm, 4.7mm, 4.8mm, 4.9mm or 5mm, etc.

If the thickness of the first separating member 21 is too small (i.e., H1<3mm), the processing of the first separating member 21 will be difficult. As a result, the processing cost of the first separating member 21 will be high, and a structural strength of the first separating member 21 will be weak. In this case, under a pressure of the cooling liquid, the first separating member 21 is prone to bending and damage. If the thickness of the first separating member 21 is too large (i.e., H1>5mm), the material cost of the first separating member 21 will be high, and the space of the cooling chamber 11 occupied by the first separating member 21 will be relatively large, making the flowing cross-sectional area of the cooling flow-channel 14 relatively small, thereby reducing the capacity of the cooling liquid in the cooling chamber 11, thus reducing the cooling efficiency of the liquid cooling plate. Therefore, by making 3mm≤ H1≤5mm, the processing cost and material cost of the first separating member 21 can be reduced, and the structural strength of the first separating member 21 can be improved to prolong the service life of the first separating member 21; meanwhile, the capacity of the cooling chamber 11 can be increased, thereby improving the cooling effect of the liquid cooling plate.

As shown in FIG. 3 and FIG. 6, in a direction perpendicular to the extending direction of the separator 2 and the third direction Z, for example, in the second direction X, a thickness H2 of the second separating member 22 satisfies: 3mm≤H2≤5mm. For example, the thickness of the second separating member 22 may be 3mm, 3.1mm, 3.2mm, 3.3mm, 3.4mm, 3.5mm, 3.6mm, 3.7mm, 3.8mm, 3.9mm, 4.0 mm, 4.1mm, 4.2mm, 4.3mm, 4.4mm, 4.5mm, 4.6mm, 4.7mm, 4.8mm, 4.9mm or 5mm, etc.

If the thickness of the second separating member 22 is too small (i.e., H2<3mm), the processing of the second separating member 22 will be difficult. As a result, the processing cost of the second separating member 22 will be high, and the structural strength of the second separating member 22 will be weak. In this case, under a pressure of the cooling liquid, the second separating member 22 is prone to bending and damage. If the thickness of the second separating member 22 is too large (i.e., H2>5mm), the material cost of the second separating member 22 will be high, and the space of the cooling chamber 11 occupied by the second separating member 22 will be relatively large, making the flowing cross-sectional area of the cooling flow-channel 14 relatively small, thereby reducing the capacity of the cooling liquid in the cooling chamber 11, thus reducing the cooling efficiency of the liquid cooling plate. Therefore, by making 3mm≤H1≤5mm, the processing cost and material cost of the second separating member 22 can be reduced, and the structural strength of the second separating member 22 can be improved to prolong the service life of the second separating member 22; meanwhile, the capacity of the cooling chamber 11 can be increased, thereby improving the cooling effect of the liquid cooling plate.

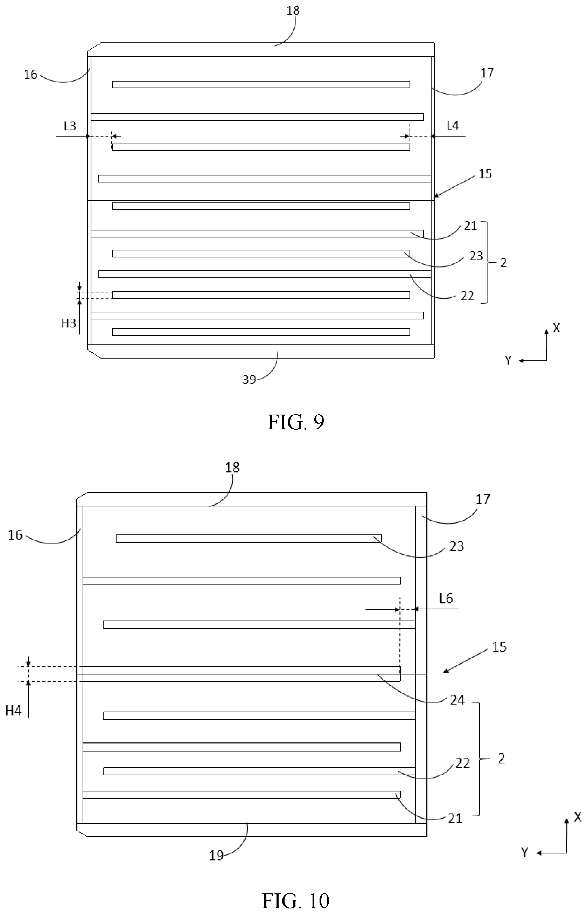

As shown in FIG. 4 and FIG. 10, the separator 2 further includes a third separating member 23. Along the extending direction of the separator 2, for example, along the first direction Y, an end of the third separating member 23 is spaced from the first side wall 16 by a third gap, and another end of third separating member 23 is spaced from the second side wall 17 by a fourth gap. Along the direction in which the liquid inlet 12 and the liquid outlet 13 are distributed, for example, along the second direction X, at least one third separating member 23 is provided between the first separating member 21 and the second separating member 22, no third separating member 23 or at least one third separating member 23 may be provided between the first separating member 21 and the third side wall 18; and/or, no third separating member 23 or at least one third separating member 23 may be provided between the first separating member 21 and the fourth side wall 19. That is, at least one third separating member 23 is provided between the first separating member 21 and the second separating member 22.

By providing the third separating member 23, the number of branch flow-channels of the cooling flow-channel 14 in the cooling chamber 11 can be increased, thereby increasing a flowing path of the cooling liquid, thus improving the cooling effect of the liquid cooling plate. Meanwhile, a risk that the flowing speed of the cooling liquid is too slow due to a large gap between the first separating member 21 and the second separating member 22 can be reduced, thereby further improving the cooling effect of the liquid cooling plate. Moreover, a risk that impurities in the cooling liquid or substances precipitated by the cooling liquid are deposited in the cooling flow-channel 14 can be reduced, thereby reducing a risk of blockage of the flow-channel at the cooling-area. In this way, the operation stability of the liquid cooling plate can be improved, and the service life of the liquid cooling plate can be prolonged.

In an example, as shown in FIG. 4 and FIG. 9, along the extending direction of the separator 2, for example, along the second direction X, a length L3 of the third gap satisfies: 0<L3≤45mm. For example, the length of the third gap may be 5mm, 10mm, 15mm, 20mm, 25mm, 30mm, 35mm, 40mm or 45mm, etc. Along the extending direction of the separator 2, for example, along the second direction X, a length L4 of the fourth gap satisfies: 0<L4≤16mm. For example, the length of the fourth gap can be 1mm, 3mm, 5mm, 7mm, 9mm, 11mm, 13mm, 15mm or 16mm, etc.

If the length of the third gap is too large (i.e., L3>45mm), the flowing speed of the cooling liquid at the third gap will be too slow. As a result, impurities in the cooling liquid and substances precipitated by the cooling liquid may be deposited at the third gap, leading to a risk of blockage of third gap. Therefore, by making 0<L3≤44mm, the flowing speed of the cooling liquid at the third gap can be increased, thereby improving the smoothness of the cooling liquid flowing in the cooling flow-channel 14, thus improving the operation stability and prolonging the service life of the liquid cooling plate. Similarly, if the length of the fourth gap is too large (i.e., L4>16mm), the flowing speed of the cooling liquid at the fourth gap will be too slow. As a result, impurities in the cooling liquid and substances precipitated by the cooling liquid may be deposited at the fourth gap, leading to a risk of blockage of the fourth gap. Therefore, by making 0<L4≤16mm, the flowing speed of the cooling liquid at the fourth gap can be increased, thereby improving the smoothness of the cooling liquid flowing in the cooling flow-channel 14, thus improving the operation stability and prolonging the service life of the liquid cooling plate.

As shown in FIG. 4 and FIG. 9, in a direction perpendicular to the extending direction of the separator 2, for example, in the first direction Y, a thickness H3 of the third separating member 23 satisfies: 3mm≤H3≤5mm. For example, the thickness H3 of the third separating member 23 can be 3mm, 3.1mm, 3.2mm, 3.3mm, 3.4mm, 3.5mm, 3.6mm, 3.7mm, 3.8mm, 3.9mm, 4.0 mm, 4.1mm, 4.2mm, 4.3mm, 4.4mm, 4.5mm, 4.6mm, 4.7mm, 4.8mm, 4.9mm or 5mm, etc. In addition, the length of the third gap and the length may be different from or the same as the length of the fourth gap, thereby increasing a selectable range of the length dimension of the third gap and the fourth gap, thus being beneficial to improving and optimizing the heat dissipation effect of the liquid cooling plate on cells 02.

If the thickness of the third separating member 23 is too small (i.e., H3<3mm), the processing of the third separating member 23 will be difficult, making the processing cost of the third separating member 23 high and the structural strength of the third separating member 23 weak. In this case, under a pressure of the cooling liquid, the third separating member 23 is prone to the risk of bending and damage. If the thickness of the third separating member 23 is too large (i.e., H3>5mm), the material cost of the third separating member 23 will be high, and the space of the cooling chamber 11 occupied by the third separating member 23 will be relatively large, making the width of the cooling flow-channel 14 relatively small. As a result, the capacity of the cooling liquid in the cooling chamber 11 is reduced, thereby reducing the cooling efficiency of the liquid cooling plate. Therefore, by making 3mm≤H3≤5mm, the processing cost and material cost of the third separating member 23 can be reduced, and the structural strength of the third separating member 23 can be improved to prolong the service life of the third separating member 23. Meanwhile, the capacity of the cooling chamber 11 can be increased, thereby improving the cooling effect of liquid cooling plate.

In some embodiments, as shown in FIG. 5, FIG. 6 and FIG. 10, the separator 2 further includes a fourth separating member 24, and the fourth separating member 24 is arranged at the central axis 15. In some examples, referring to FIG. 6, along the extending direction of the separator 2, for example, along the second direction X, an end of the fourth separating member 24 is spaced from the first side wall 16 by a fifth gap, and another end of the fourth separating member 24 is connected to the second side wall 17. In some other examples, along the extending direction of the separator 2, for example, along the second direction X, an end of the fourth separating member 24 is spaced from the second side wall 17 by a sixth gap, and another end of the fourth separating member 24 is connected to first side wall 16. In yet some other examples, along the extending direction of the separator 2, for example, along the second direction X, an end of the fourth separating member 24 is spaced from the first side wall 16 by a fifth gap, and another end of the fourth separating member 24 is spaced from the second side wall 17 by a sixth gap.

It should be noted that in an example as shown in FIG. 5 and FIG. 6, an end of the fourth separating member 24 is spaced from the first side wall 16 by a fifth gap, and another end of the fourth separating member 24 is connected to the second side wall 17; and in an example as shown in FIG. 10, an end of the fourth separating member 24 is connected to the first side wall 16, and another end of the fourth separating member 24 is spaced from the second side wall 17 by a sixth gap.

In this way, the fourth separating member 24 is provided at the central axis 15. The fourth separating member 24 can support the top wall 1a and the bottom wall 1b located at the central axis 15, thereby reducing a risk of collapse and deformation of the liquid cooling plate due to lack of support at the central axis 15. Thus, the structural strength of the liquid cooling plate can be improved, and the service life of the liquid cooling plate can be prolonged.

As shown in FIG. 6, in a direction perpendicular to the extending direction of the separator 2, for example, in the second direction X, a thickness H4 of the fourth separating member 24 satisfies: 7mm≤H4≤8mm. For example, the thickness of the fourth separating member 24 may be 7mm, 7.1mm, 7.2mm, 7.3mm, 7.4mm, 7.5mm, 7.6mm, 7.7mm, 7.8mm, 7.9mm or 8mm, etc.

If the thickness of the fourth separating member 24 is too small (i.e., H4<7mm), the fourth separating member 24 will have a poor support effect on the top wall 1a and the bottom wall 1b; if the thickness of the fourth separating member 24 is too large (i.e., H4>8mm), the material cost of the fourth separating member 24 will be high, and the space of the cooling chamber 11 occupied by fourth separating member 24 will be relatively large, making the flowing cross-sectional area of the cooling flow-channel 14 relatively small. As a result, the capacity of the cooling liquid in the cooling chamber 11 is reduced, thereby reducing the cooling efficiency of the liquid cooling plate. Therefore, by making 7mm≤H4≤8mm, the processing cost and material cost of the fourth separating member 24 can be reduced, and the support effect of the fourth separating member 24 can be improved, thereby improving the structural strength of a middle portion of the liquid cooling plate to prolong the service life of the liquid cooling plate. Meanwhile, the capacity of the cooling chamber 11 can be increased, thereby improving the cooling effect of the liquid cooling plate on the cells 02.

As shown in FIG. 6, along the extending direction of the separator 2, for example, along the second direction X, a length L5 of the fifth gap satisfies: 0<L5≤50mm. For example, the length of the fifth gap may be 5mm, 10mm, 15mm, 20mm, 25mm, 30mm, 35mm, 40mm, 45mm or 50mm, etc.

If the length of the fifth gap is too large (i.e., L5>50mm), the flowing speed of the cooling liquid at the fifth gap will be too small, and there is a risk that impurities in the cooling liquid and substances precipitated by the cooling liquid will be deposited at the fifth gap to result in blockage of the fifth gap. Therefore, by making 0<L5≤50mm, the flowing speed of the cooling liquid at the fifth gap can be increased, thereby improving the smoothness of the cooling liquid flowing in the cooling flow-channel 14, thus improving the operation stability of the liquid cooling plate and prolonging the service life of the liquid cooling plate.

As shown in FIG. 10, along the extending direction of the separator 2, for example, along the second direction X, a length L6 of the sixth gap satisfies: 0<L6≤50mm. For example, the length of the sixth gap may be 5mm, 10mm, 15mm, 20mm, 25mm, 30mm, 35mm, 40mm, 45mm or 50mm, etc.

If the length of the sixth gap is too large (i.e., L6>50mm), the flowing speed of the cooling liquid at the sixth gap will be too small, and there is a risk that impurities in the cooling liquid and substances precipitated by the cooling liquid will be deposited at the sixth gap to result in blockage of the sixth gap. Therefore, by making 0<L6≤50mm, the flowing speed of the cooling liquid at the sixth gap can be increased, thereby improving the smoothness of the cooling liquid flowing in the cooling flow-channel 14, thus improving the operation stability of the liquid cooling plate and prolonging the service life of the liquid cooling plate.

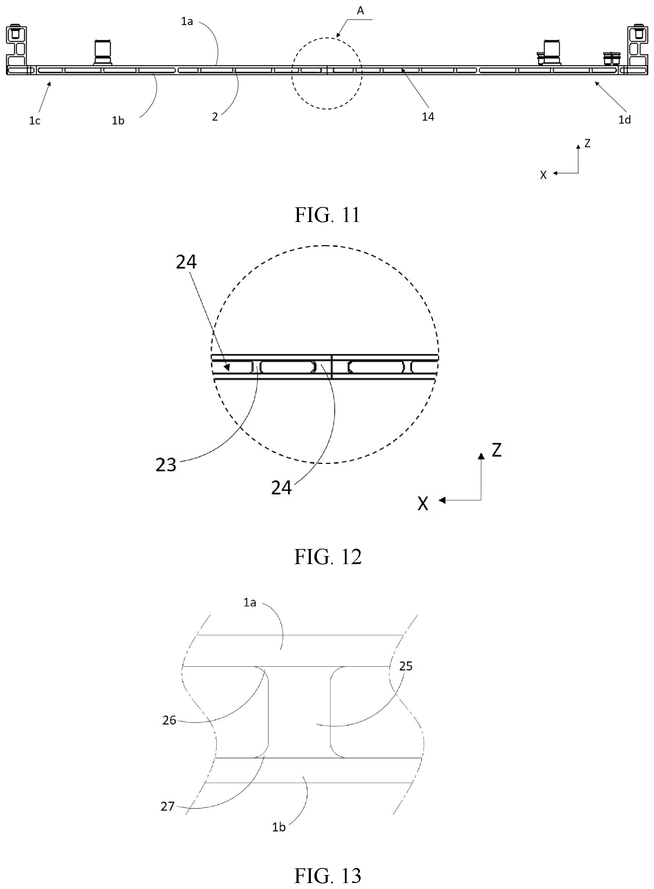

In some embodiments, as shown in FIG. 11, FIG. 12 and FIG. 13, the separator 2 includes a dividing body 25, a first transition portion 26 and a second transition portion 27. Along the third direction Z, the first transition portion 26 and the second transition portion 27 are located at two ends of the dividing body 25. The dividing body 25 is connected to the top wall 1a through the first transition portion 26, and the dividing body 25 is connected to the bottom wall 1b through the second transition portion 27. Along the second direction X, a thickness dimension of the separator 2 at the first transition portion 26 is greater than a thickness dimension of the dividing body 25, and a thickness dimension of the separator 2 at the second transition portion 27 is also greater than the thickness dimension of the dividing body 25, to increase a connection area between the separator 2 and the top wall 1a and the bottom wall 1b, thereby improving the connection strength between the separator 2 and the top wall 1a and the bottom wall 1b.

In some embodiments, an outer contour of the first transition portion 26 can be a straight surface or an arc surface, an outer contour of the second transition portion 27 can be a straight surface or an arc surface. In an example, as shown in FIG. 13, the outer contour of the first transition portion 26 is an arc surface, and the outer contour of the second transition portion 27 is an arc surface. The outer contour of the first transition portion 26 and the outer contour of the second transition portion 27 are both arc surfaces, thereby facilitating the processing of the first transition portion 26 and the second transition portion 27.

In some embodiments, a radius R1 of the first transition portion 26 satisfies: 1mm ≤R1≤2 mm. For example, the radius of the first transition portion 26 can be 1 mm, 1.1mm, 1.2mm, 1.3mm, 1.4mm, 1.5mm, 1.6mm, 1.7mm, 1.8mm, 1.9mm or 2mm, etc. If R1<1mm, the processing difficulty and processing cost of the first transition portion 26 are high; if R1>2mm, the thickness of the separator 2 is relatively large. Therefore, by making 1mm≤R1≤2mm, the processing cost of the separator 2 can be reduced and the thickness of the separator 2 can be reduced, thereby being beneficial to improving the cooling efficiency of the liquid cooling plate on the cells 02.

In some embodiments, a radius R1 of the second transition portion 27 satisfies: 1mm ≤R2≤2 mm. For example, the radius of the second transition portion 27 can be 1 mm, 1.1mm, 1.2mm, 1.3mm, 1.4mm, 1.5mm, 1.6mm, 1.7mm, 1.8mm, 1.9mm or 2mm, etc. If R2<1mm, the processing difficulty and processing cost of the second transition portion 27 are high; if R1>2mm, the thickness of the separator 2 is relatively large. Therefore, by making 1mm≤R2 ≤2mm, the processing cost of the separator 2 can be reduced and the thickness of the separator 2 can be reduced, thereby being beneficial to improving the cooling efficiency of the liquid cooling plate on the cells 02.

In some embodiments, along the third direction Z, a height h of the separator 2 satisfies: 5mm≤h≤8mm. For example, the height of the separator 2 may be 5mm, 5.5mm, 6mm, 6.5mm, 7mm, 7.5mm, 8mm, etc.

If the height of the separator 2 is too small (i.e., h<5mm), the processing of the separator 2 will be difficult and the processing cost will be high; if the height of the separator 2 is too large (i.e., h>8mm), a size of the separator 2 will be relatively large and the material cost of the separator 2 will be high, and an overall height of the liquid cooling plate will be relatively large, making it is difficult for installation and usage of the liquid cooling plate. Therefore, by making 5mm≤h≤8mm, the processing difficulty and the processing cost of the separator 2 can be reduced, and an overall height of the liquid cooling plate can be reduced, thereby being beneficial to installation and usage of the liquid cooling plate.

In the embodiments, the liquid cooling plate can be an integrated structure to increase the overall structural strength of the liquid cooling plate; or as shown in FIG. 2, the liquid cooling plate includes a first plate body 1c and a second plate body 1d symmetrically distributed along the second direction X. The first plate body 1c and the second plate body 1d have a same structure to reduce the processing cost of the liquid cooling plate. The central axis 15 is located at a connection position of the first plate body 1c and the second plate body 1d. The cooling flow-channel 14 in the first plate body 1c and the cooling flow-channel 14 in the second plate body 1d are symmetrically distributed with respect to the central axis 15, and The cooling flow-channel 14 in the first plate body 1c and the cooling flow-channel 14 in the second plate body 1d communicate with each other. The fourth separating member 24 is located at a connection position of the first plate body 1c and the second plate body 1d, and the fourth separating member 24 is formed by splicing the separator 2 at the first plate body 1c located at the central axis 15 and the separator 2 at the second plate body 1d located at the central axis 15, to increase connection stability of the first plate body 1c and the second plate body 1d.

## Claims

1. A battery pack comprising a liquid cooling plate, wherein the liquid cooling plate comprises:
a plate body (1) defining a cooling chamber (11) and provided with a liquid inlet (12) and a liquid outlet (13), wherein the cooling chamber (11) communicates with outside through the liquid inlet (12) and the liquid outlet (13); and
a separator (2) installed to the plate body (1), wherein along a direction in which the liquid inlet (12) and the liquid outlet (13) are distributed, the cooling chamber (11) is divided into cooling flow-channels (14) by the separator (2), and adjacent ones of the cooling flow-channels (14) communicate with each other,
wherein the separators (2) is non-uniformly distributed at the plate body (1);
wherein the first direction (Y) is perpendicular to the second direction (X), the first direction (Y) and the second direction (X) are both perpendicular to a height direction of the battery pack; wherein the liquid inlet (12) and the liquid outlet (13) are distributed along the first direction (Y), or the liquid inlet (12) and the liquid outlet (13) are distributed along the second direction (X), or the liquid inlet (12) and the liquid outlet (13) are distributed along a direction which forms an angle with respect to the first direction (Y) or the second direction (X), the angle being greater than 0° and less than 90°; the liquid cooling plate has a central axis (15), an extending direction of the central axis (15) is parallel to the first direction (Y), or the extending direction of the central axis (15) is parallel to the second direction (X), or the extending direction of the central axis (15) forms an angle with respect to the first direction (Y) and the second direction (X), the angle being greater than 0° and less than 90°;
wherein flowing cross-sectional areas of the cooling flow-channels (14) decrease along the direction in which the liquid inlet (12) and the liquid outlet (13) are distributed; and the flowing cross-sectional area of the cooling flow-channel (14) at the liquid outlet (13) is smaller than the flowing cross-sectional area of the cooling flow-channel (14) at the liquid inlet (12);
wherein the plate body (1) comprises a first side wall (16) and a second side wall (17) oppositely arranged along the first direction (Y); wherein the separator (2) comprises a first separating member (21) and a second separating member (22), and along an extending direction of the separator (2), an end of the first separating member (21) is connected to the first side wall (16) and another end of the first separating member (21) is spaced from the second side wall (17) by a first gap, and an end of the second separating member (22) is connected to the second side wall (17) and another end of the second separating member (22) is spaced from the first side wall (16) by a second gap; and wherein along the direction in which the liquid inlet (12) and the liquid outlet (13) are distributed, first separating members (21) and second separating members (22) are alternately arranged and spaced from one another; and
wherein the separator (2) comprises a fourth separating member (24) arranged at the central axis (15); wherein the plate body (1) comprises a first side wall (16) and a second side wall (17) arranged oppositely along a first direction (Y);wherein along an extending direction of the separator (2), an end of the fourth separating member (24) is spaced from the first side wall (16) by a fifth gap and another end of the fourth separating member (24) is connected to the second side wall (17), wherein in a direction perpendicular to an extending direction of the separator (2) and a thickness direction of the plate body (1), a thickness H4 of the fourth separating member (24) satisfies 7mm≤H4≤8mm.

2. The battery pack according to claim 1, wherein the cooling flow-channels (14) at least comprise a first flow-channel (141) and a second flow-channel (142), and a flowing cross-sectional area of the first flow-channel (141) is different from a flowing cross-sectional area of the second flow-channel (142); and wherein along the direction in which the liquid inlet (12) and the liquid outlet (13) are distributed, first flow-channels (141) or the second flow-channels (142) are symmetrically distributed with respect to the central axis (15), and a preset angle is formed between the central axis (15) and a first direction (Y).

3. The battery pack according to claim 2,
wherein the flowing cross-sectional area of the first flow-channel (141) is greater than the flowing cross-sectional area of the second flow-channel (142); and
wherein along the direction in which the liquid inlet (12) and the liquid outlet (13) are distributed, the liquid inlet (12) and the liquid outlet (13) communicate with the first flow-channel (141) located at one of two sides of the central axis (15), respectively, and the second flow-channel (142) is located between the first flow-channel (141) and the central axis (15).

4. The battery pack according to any one of claims 1-3, wherein along the extending direction of the separator (2), a length L1 of the first gap satisfies 0<L1≤44mm, and a length L2 of the second gap satisfies 0<L2≤44mm.

5. The battery pack according to any one of claims 1-4,
wherein in a direction perpendicular to the extending direction of the separator (2) and a thickness direction of the plate body (1), a thickness H1 of the first separating member (21) satisfies 3mm≤H1≤5mm, and a thickness H2 of the second separating member (22) satisfies 3mm≤H2≤5mm.

6. The battery pack according to any one of claims 1-5, wherein along the extending direction of the separator (2), a length L3 of the third gap satisfies 0<L3≤45mm, and a length L4 of the fourth gap satisfies 0<L4≤16mm.

7. The battery pack according to any one of claims 1-6, wherein the separator (2) further comprises at least one third separating member (23), and along the extending direction of the separator (2), an end of each of the at least one third separating member (23) is spaced from first side wall (16) by a third gap, and another end of each of the at least one third separating member (23) is spaced from the second side wall (17) by a fourth gap; wherein along the direction in which the liquid inlet (12) and the liquid outlet (13) are distributed, one of the at least one third separating member (23) is located between the first separating member (21) and the second separating member (22).

8. The battery pack according to claim 7, wherein in a direction perpendicular to the extending direction of the separator (2) and a thickness direction of the plate body (1), a thickness H3 of each of the at least one third separating member (23) satisfies 3 mm≤H3≤5 mm.

9. The battery pack according to any one of claims 1 to 8,
wherein the plate body (1) comprises a top wall (1a) and a bottom wall (1b) arranged oppositely along a thickness direction of the liquid cooling plate;
wherein the separator (2) comprises a dividing body (25), and along the thickness direction of the liquid cooling plate, two ends of the dividing body (25) are provided with a first transition portion (26) and a second transition portion (27), respectively, the first transition portion (26) is connected to the top wall (1a), and the second transition portion (27) is connected to the bottom wall (1b); and
in a direction perpendicular to an extending direction of the separator (2) and a thickness direction of the plate body (1), a thickness of the first transition portion (26) is greater than a thickness of the dividing body (25), and a thickness of the second transition portion (27) is greater than the thickness of the dividing body (25).

10. The battery pack according to claim 9, wherein in the direction perpendicular to the extending direction of the separator (2) and the thickness direction of the plate body (1), a side wall of the first transition portion (26) is a straight surface or an arc surface, and
a side wall of the second transition portion (27) is a straight surface or an arc surface.

11. The battery pack according to any one of claims 1-10, wherein the battery pack comprises a case (01) comprising a cover (011) and a bottom plate (012), wherein the cover (011) and the bottom plate (012) defines a receiving cavity; and cells (02) installed in the receiving cavity; wherein the bottom plate (012) is the liquid cooling plate or the liquid cooling plate is installed between the bottom plate (012) and the cells (02).
